# EUROPEAN PATENT SPECIFICATION

(11) **EP 3 492 949 B1**
(45) Date of publication and mention of the grant of the patent: **10.06.2020**
(21) Application number: 18208950.8
(22) Date of filing: 28.11.2018
(51) Int. Cl.: G01S 7/481, G01S 17/02, G01S 17/06, G01S 17/931

(54) **LIDAR COVER**
LIDAR-ABDECKUNG
COUVERCLE DE LIDAR

(30) Priority: 30.11.2017 JP 2017230068
(43) Date of publication of application: 05.06.2019
(73) Proprietor: Faltec Co., Ltd., Kawasaki-shi, Kanagawa 212-0013 (JP)
(72) Inventor: SHIMIZU, Yusuke, Kawasaki-shi, Kanagawa 212-0013 (JP); YAMAGUCHI i, Kazuk, Kawasaki-shi, Kanagawa 212-0013 (JP)
(74) Representative: Troesch Scheidegger Werner AG

(56) References cited:
- EP-A1- 1 503 221
- EP-A1- 1 837 920
- EP-A1- 3 104 190
- JP-A- 2003 202 369
- US-A1- 2002 005 941
- US-A1- 2005 201 096
- US-B2- 8 996 082

## Description

### TECHNICAL FIELD

The present invention relates to a lidar cover.

This application claims priority from Japanese Patent Application No. 2017-230068 filed on November 30, 2017.

### BACKGROUND ART

In recent years, due to an increase in safety consciousness or the like, a lidar unit (Light Detection and Ranging, Laser Imaging Detection and Ranging) for detecting an obstacle or the like around a vehicle is increasingly mounted on the vehicle. The lidar unit emits measurement light which cannot be visually recognized by the naked eyes such as infrared light and receives reflected light thereof, and thereby acquires data indicating the distance to an object such as an obstacle or the shape of the object. In the case of mounting the above-described lidar unit on a vehicle, a lidar cover may be provided in front of the lidar unit in order to, for example, protect the lidar unit. For example, Patent Document 1 discloses a lidar cover having metallic luster due to a cold mirror layer. Additionally, Patent Document 2 discloses a lidar cover having metallic luster due to a germanium (Ge) layer. Moreover, a black lidar cover that transmits infrared light therethrough is also known.

### PRIOR ART DOCUMENTS

### PATENT DOCUMENTS

(Patent Document 1) Japanese Unexamined Patent Application, First Publication No. 2004-198617
(Patent Document 2) Japanese Unexamined Patent Application, First Publication No. 2010-243436

EP-1.503.221-A1 describes a LIDAR having a cover and a transparent band-shaped window, which is seamlessly built into the casing; the emitting beam exits at the upper window part and the receiving light enters at the lower part of the window.

US2005/201.096-A1 describes an automotive LIDAR having an upper receiving light part and a lower emitting light part. Both parts have own transparent windows. The casing is mounted behind a car grille cover.

EP-3.104.190A1 describes an optical proximity sensor having an emitting window which appears visually black and the receiving window appears visually grey or translucent for cosmetic reasons (smart phone); both windows treat the visual light by applying different absorptance. The IR measurement light transmittance for the emitting window is lower than the IR transmittance for the receiving window.

### SUMMARY OF THE INVENTION

### PROBLEMS TO BE SOLVED BY THE INVENTION

However, part of the measurement light of the lidar unit is absorbed and attenuated when transmitting through the cold mirror layer or the germanium (Ge) layer. In order to be able to detect a further distant obstacle or the like, it is preferable to form a lidar unit only by a material having a high degree of transmittance with respect to measurement light without provision of the cold mirror layer or the germanium (Ge) layer. However, in the case of forming a lidar cover only by a material having transparency with respect to visible light and measurement light, the lidar unit is clearly visible from the outside, it is not suitable for an exterior component of a vehicle whose design of external appearance is extremely important. Also, in the case of forming a lidar cover only by a black resin material having a high degree of transmittance with respect to measurement light, since a color of the lidar cover is limited, it is not suitable for an exterior component of a vehicle.

The invention was made with respect to the above-described problems, and has an object to provide a lidar cover that is used as an exterior component of a vehicle, prevents measurement light of the lidar unit from being attenuated, and can improve flexibility in appearance design.

### MEANS FOR SOLVING THE PROBLEMS

In order to solve the above-described problems, the invention employs the following configurations.

An aspect of the invention provides a lidar cover that covers a lidar unit mounted on a vehicle and is capable of transmitting measurement light of the lidar unit therethrough. The lidar cover includes: a visible light reflection region that is a first region of the lidar cover as seen in a transmission direction of the measurement light and includes a visible light reflection layer, the visible light reflection layer reflecting at least part of visible light from outside and allowing the measurement light to transmit therethrough; and a high-transmittance region that is a second region different from the first region and has transmittance of the measurement light higher than that of the visible light reflection region.

In the lidar cover of the aspect of the invention, the visible light reflection region may be disposed at an upper portion of the entire region as seen in the transmission direction of the measurement light.

The lidar cover of the aspect of the invention may further include: a base layer that is capable of transmitting the measurement light therethrough, has a back surface, and is disposed so that the back surface faces the lidar unit; and a protective layer that is capable of transmitting the measurement light and the visible light therethrough. The visible light reflection layer may be disposed at a position close to a front surface of the base layer on the visible light reflection region, and the protective layer may be disposed at a position closest to a surface layer on the visible light reflection region and the high-transmittance region.

The lidar cover of the aspect of the invention may further include a thickness adjusting layer that is disposed at a position close to the front surface of the base layer on the high-transmittance region and at least allows the measurement light to transmit therethrough.

In the lidar cover of the aspect of the invention, the visible light reflection layer may be a cold mirror layer formed of a dielectric laminated film.

In the lidar cover of the aspect of the invention, the visible light reflection layer may be formed of a laminated metal thin film having a plurality of layered metal thin films.

In the lidar cover of the aspect of the invention, the visible light reflection layer may allow only part of wavelength components included in the measurement light to selectively transmit therethrough.

### Effects of the Invention

According to the aspect of the invention, the first region of the entire region (one of the regions) in the case where the lidar cover is viewed in the transmission direction of the measurement light is the visible light reflection region. The visible light reflection region includes a visible light reflection layer that reflects at least part of visible light from outside and allows the measurement light to transmit therethrough. Since the above-described visible light reflection region reflects at least part of visible light, the visible light reflection region is visually recognized from outside as a colored region such as a region having metallic tone. On the other hand, according to the aspect of the invention, the second region (the other of the regions) different from the aforementioned visible light reflection region is the high-transmittance region that has transmittance of the measurement light higher than that of the visible light reflection region. That is, the lidar cover according to the aspect of the invention includes two regions different from each other in optical characteristics, which are: a region (visible light reflection region) that has relatively low transmittance of the measurement light, is a colored region, and provides excellent designability; and a region (high-transmittance region) that has a relatively low degree of flexibility in design but has a high degree of transmittance with respect to measurement light. Consequently, in accordance with the state where the lidar cover is provided, a layout can be selected such that: the visible light reflection region is disposed at a region which is easily and visually recognized by an external person; and the high-transmittance region is disposed at a region which is less likely to be visually recognized by an external person. As a result, according to the aspect of the invention, it is possible to provide a lidar cover that is used as an exterior component of a vehicle, prevents measurement light of the lidar unit from being attenuated, and can improve flexibility in appearance design.

### BRIEF DESCRIPTION OF THE DRAWINGS

FIG. 1A is a front view showing a schematic configuration including a lidar cover according to an embodiment of the invention.
FIG. 1B is a side view showing a schematic configuration including the lidar cover according to the embodiment of the invention.
FIG. 2A is a front view showing a schematic configuration of the lidar cover according to the embodiment of the invention.
FIG. 2B is a cross-sectional view taking along the line A-A of FIG. 2A.
FIG. 3A is a schematic explanatory view showing a method of manufacturing the lidar cover according to the embodiment of the invention.
FIG. 3B is a schematic explanatory view showing a method of manufacturing the lidar cover according to the embodiment of the invention.
FIG. 4 is a cross-sectional view showing a lidar cover according to a modified example of the embodiment of the invention.
FIG. 5A is a schematic explanatory view showing a method of manufacturing a lidar cover according to a modified example of the embodiment of the invention.
FIG. 5B is a schematic explanatory view showing a method of manufacturing a lidar cover according to a modified example of the embodiment of the invention.
FIG. 6A is a cross-sectional view showing a lidar cover according to a modified example of the embodiment of the invention.
FIG. 6B is a cross-sectional view showing a lidar cover according to a modified example of the embodiment of the invention.

### EMBODIMENTS FOR CARRYING OUT THE INVENTION

Hereinafter, a lidar cover according to an embodiment of the invention will be described with reference to drawings. In these drawings which are utilized in the following explanation, appropriate changes have been made in the scale of the various members, in order to represent them at scales at which they can be easily understood.

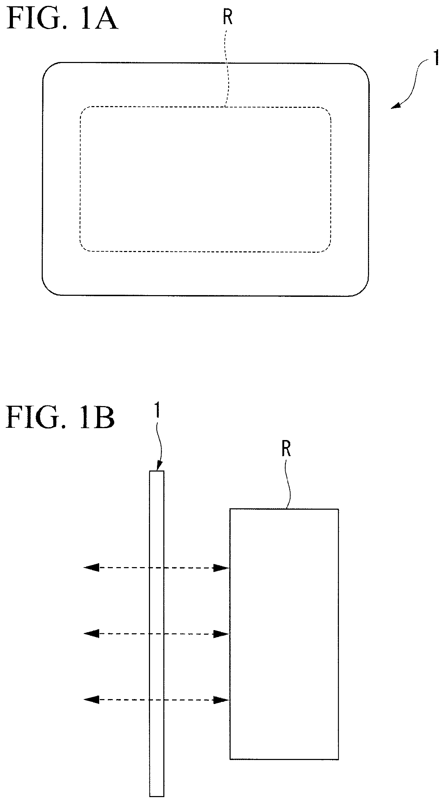

FIG. 1A is a front view showing a schematic configuration including a lidar cover 1 according to the embodiment, and FIG. 1B is a side view showing a schematic configuration including the lidar cover 1 according to the embodiment. The lidar cover 1 according to the embodiment is a cover member disposed so as to cover a lidar unit R mounted on a vehicle, and the lidar cover covers the outside of the vehicle. For example, in the case where the lidar unit R emits measurement light forward from the vehicle, the lidar cover 1 according to the embodiment is disposed in front of the lidar unit R. In the case where the lidar unit R emits measurement light to the right side of the vehicle, the lidar cover 1 according to the embodiment is disposed at the right of the lidar unit R. In the case where the lidar unit R emits measurement light to the left side of the vehicle, the lidar cover 1 according to the embodiment is disposed at the left of the lidar unit R. In the case where the lidar unit R emits measurement light rearward from the vehicle, the lidar cover 1 according to the embodiment is disposed at the rear of the lidar unit R. That is, the posture of the lidar cover 1 according to the embodiment which is provided on the lidar unit R is not particularly limited.

The lidar unit R covered with the lidar cover 1 according to the embodiment is a device that emits infrared light laser light or the like as measurement light and obtains a distance to an object or a shape of the object in accordance with reflected light of the measurement light. For example, the lidar unit R includes: an emitter that is provided with a light source generating the measurement light, an irradiating lens guiding the measurement light, or the like; a light receiver that is provided with a light receiving lens guiding reflected light incident thereto, a light receiving element converting the reflected light into an electrical signal, or the like; and a calculator that signal-processes the electrical signal output from the light receiver. Note that, a configuration of the lidar unit R is not particularly limited.

As shown in FIGS. 1A and 1B, the lidar cover 1 according to the embodiment is formed in a substantially rectangular plate shape and is disposed in a state where the back surface side thereof is directed to the lidar unit R. The above-described lidar cover 1 according to the embodiment is supported by other component which is not shown in the figure and is disposed as an exterior component of a vehicle. Note that, the lidar cover 1 according to the embodiment does not need to be formed in a substantially rectangular shape. For example, in the case where the lidar cover 1 according to the embodiment is disposed so as to be fitted into an opening formed on other resin exterior component, the lidar cover 1 according to the embodiment is formed in a shape corresponding to the shape of the opening. For example, in the case where the aforementioned opening is formed in a circular shape, the shape of the lidar cover 1 according to the embodiment is a circular shape. In the case where the aforementioned opening is formed in a triangular shape, the shape of the lidar cover 1 according to the embodiment is a triangular shape. Furthermore, the front surface and the back surface of the lidar cover 1 according to the embodiment do not need to be a flat surface. For example, in the case where the lidar cover 1 according to the embodiment is provided integrally with a member having other curved surface, the front surface and the back surface of the lidar cover are each a curved surface so as to be on the same plane with respect to the surface of the other member. Moreover, for example, the overall shape of the lidar cover 1 according to the embodiment may be a shape of a resin exterior component.

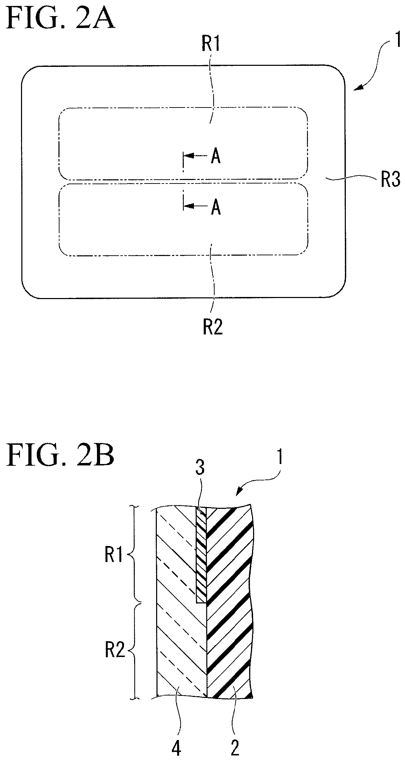

FIG. 2A a front view showing a schematic configuration of the lidar cover 1 according to the embodiment, and FIG. 2B is a cross-sectional view taking along the line A-A of FIG. 2A. As shown in FIG. 2A, the lidar cover 1 according to the embodiment includes: a visible light reflection region R1 (one of regions, first region): a high-transmittance region R2 (the other of the regions, second region): and a surrounding region R3 (third region).

The visible light reflection region R1 is a region that is disposed at an upper portion of the entire region of the lidar cover 1 as seen in the transmission direction of the measurement light (measurement light emission direction). The visible light reflection region R1 is disposed above the high-transmittance region R2. Generally, the lidar cover 1 is disposed at a position at which a person outside the vehicle looks down. Because of this, the visible light reflection region R1 that is disposed above the high-transmittance region R2 is disposed at the position which is easily and visually recognized by an external person more than the high-transmittance region R2. The visible light reflection region R1 reflects visible light from outside and allows measurement light to transmit therethrough by a cold mirror layer 3 which will be described later. For example, in the lidar cover 1 according to the embodiment, the visible light reflection region R1 is disposed in front of an emitter of the lidar unit R.

The high-transmittance region R2 is a region that is disposed at a lower portion of the entire region of the lidar cover 1 as seen in the transmission direction of the measurement light (measurement light emission direction). As mentioned above, generally, the lidar cover 1 is disposed at a position at which a person outside the vehicle looks down. Accordingly, the high-transmittance region R2 that is disposed below the visible light reflection region R1 is disposed at the position which less likely to be visually recognized by an external person. The cold mirror layer 3 is not disposed on the high-transmittance region R2, and the high-transmittance region R2 allows measurement light to transmit therethrough with a high degree of efficiency. For example, in the lidar cover 1 according to the embodiment, the high-transmittance region R2 is disposed in front of a light receiver of the lidar unit R.

The surrounding region R3 is an annular region of the entire region of the lidar cover 1 as seen in the transmission direction of the measurement light (measurement light emission direction), and the annular region surrounds the entire periphery of the visible light reflection region R1 and the high-transmittance region R2. As shown in FIGS. 1A and 1B, the lidar cover 1 according to the embodiment has a size such that an outer-edge portion thereof laterally protrudes from the lidar unit R. The surrounding region R3 is a region that laterally protrudes from the lidar unit R. Similarly to the visible light reflection region R1, the above-described surrounding region R3 has the cold mirror layers 3 disposed thereon and reflects visible light from outside.

As shown in FIG. 2B, the lidar cover 1 according to the embodiment includes a base layer 2, the cold mirror layer 3 (reflection layer), and a protective layer 4. The base layer 2 is a support member that supports the cold mirror layer 3 and the protective layer 4 and is disposed such that the back surface side thereof faces the lidar unit R. The base layer 2 is capable of transmitting measurement light therethrough and is formed of, for example, a black or transparent acrylic resin material. Note that, the base layer 2 is not necessary to be a single layer and may has, for example, a multilayer structure including an ink layer that is capable of transmitting measurement light therethrough.

The cold mirror layer 3 is formed of a dielectric laminated film that reflects visible light from outside and allows infrared light to transmit therethrough. As shown in FIG. 2B, the above-described cold mirror layer 3 is disposed and layered on the front surface of the base layer 2 on the visible light reflection region R1. In other cases, the above-described cold mirror layer 3 may be adhesively fixed to the base layer 2 with another layer that allows measurement light to transmit therethrough therebetween.

Additionally, in the lidar cover 1 according to the embodiment, the cold mirror layer 3 is not provided on the high-transmittance region R2. Therefore, measurement light does not pass through the cold mirror layer 3 on the high-transmittance region R2 and passes through the lidar cover 1 without being absorbed by the cold mirror layer 3. The above-described cold mirror layer 3 has transmittance of the measurement light lower than that of the protective layer 4 having transparency with respect to visible light and measurement light. Therefore, as compared with the visible light reflection region R1, the high-transmittance region R2 on which the cold mirror layer 3 is not provided is a region having a high degree of transmittance with respect to measurement light.

Note that, in the lidar cover 1 according to the embodiment, the cold mirror layer 3 is provided not only on the visible light reflection region R1 but also on the surrounding region R3. Since the surrounding region R3 is the portion that laterally protrudes from the lidar unit R as described above, the surrounding region is not required to allow measurement light to transmit therethrough, and it is not necessarily the case that the cold mirror layer 3 is provided on the surrounding region. However, by providing the cold mirror layer 3 on the surrounding region, it is possible to match the color tone of the surrounding region R3 to that of the visible light reflection region R1, and the color tone of the entire region of the lidar cover 1 can be substantially a uniform condition.

The protective layer 4 is a clear layer formed on a surface of the base layer 2 on the opposite side of the lidar unit R so as to cover the cold mirror layer 3 and is adhesively fixed to the front surface of the base layer 2. The protective layer 4 is a thin layer that protects the front surfaces of the base layer 2 and the cold mirror layer 3 and allows visible light and measurement light to transmit therethrough. The above-described protective layer 4 is formed by, for example, hard coating treatment for preventing the layer from being scratched or clear coating treatment using a urethane-based coating material. By the above-described protective layer 4, the lidar cover 1 according to the embodiment has scratch resistance or weatherability.

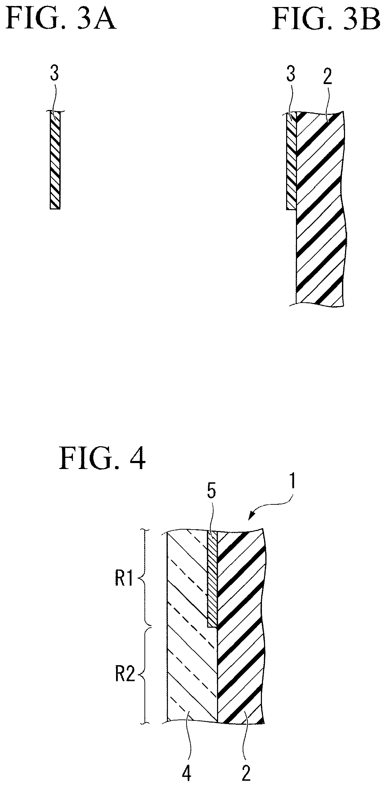

In the case of manufacturing the lidar cover 1 according to the embodiment, firstly, as shown in FIG. 3A, the cold mirror layer 3 is formed. The cold mirror layer 3 is formed by, for example, shaping in vacuum molding. The shape of the cold mirror layer 3 formed as described above is set to be matched to those of the visible light reflection region R1 and the surrounding region R3. Next, as shown in FIG. 3B, the base layer 2 is formed. Here, by insert molding such that the cold mirror layer 3 is accommodated into the inside of a die and the base layer 2 is formed by injection molding, the base layer 2 integrated with the cold mirror layer 3 is formed. Finally, by hard coating treatment or clear coating treatment which are described above, the protective layer 4 is formed.

According to the above-described lidar cover 1 of the embodiment, measurement light emitted from the emitter of the lidar unit R transmits through the visible light reflection region R1. At this time, the measurement light slightly is absorbed by the lidar cover 1 as compared with the high-transmittance region R2. However, the measurement light immediately after emitted from the emitter of the lidar unit R has an amount of light that is extremely higher than that of reflected light reflected by an obstacle or the like. For this reason, even where part of the measurement light immediately after emitted from the emitter is absorbed by the lidar cover 1, it hardly affects a measuring range in which the lidar unit R can carry out measurement.

On the other hand, in the lidar cover 1 according to the embodiment, measurement light reflected by an obstacle or the like transmits through the high-transmittance region R2. The reflected measurement light that reaches the light receiver of the lidar unit R has an amount of light that is extremely lower than the measurement light immediately after emitted from the emitter. However, since the high-transmittance region R2 allows measurement light to transmit therethrough with a high degree of efficiency as compared with the visible light reflection region R1, the measurement light reflected by an obstacle or the like reaches the lidar unit R without being mostly absorbed by the lidar cover 1.

In the lidar cover 1 according to the embodiment described above, the first region of the entire region (one of the regions) in the case where the lidar cover 1 is viewed in the transmission direction of the measurement light is the visible light reflection region R1. The visible light reflection region includes the cold mirror layer 3 that reflects visible light from outside and allows the measurement light to transmit therethrough. Since the above-described visible light reflection region R1 reflects visible light from outside, the visible light reflection region is visually recognized from outside as a region having metallic tone. On the other hand, in the lidar cover 1 according to the embodiment, the region (second region, the other of the regions) different from the aforementioned visible light reflection region R1 is the high-transmittance region R2 that has transmittance of the measurement light higher than that of the visible light reflection region R1.

That is, the lidar cover 1 according to the embodiment includes two regions different from each other in optical characteristics, which are: a region (visible light reflection region R1) that has relatively low transmittance of the measurement light, is a colored region, and provides excellent designability; and a region (high-transmittance region R2) that has a relatively low degree of flexibility in design but has a high degree of transmittance with respect to measurement light. Consequently, in accordance with the state where the lidar cover 1 is provided, a layout can be selected such that: the visible light reflection region R1 is disposed at a region which is easily and visually recognized by an external person; and the high-transmittance region R2 is disposed at a region which is less likely to be visually recognized by an external person. For example, in the embodiment, a layout is adopted such that: the visible light reflection region R1 is disposed at the upper portion of the lidar cover 1; and the high-transmittance region R2 is disposed at the lower portion of the lidar cover 1 and in front of the light receiver of the lidar unit R.

As a result, the lidar cover 1 according to the embodiment that can be used as an exterior component of a vehicle, prevents measurement light of the lidar unit R from being attenuated, and can improve flexibility in appearance design.

Moreover, in the lidar cover 1 according to the embodiment, the visible light reflection region R1 is disposed at the upper portion of the entire region when the lidar cover 1 is viewed in the transmission direction of the measurement light. Generally, the lidar cover 1 is disposed at a position at which a person outside the vehicle looks down. Therefore, by providing the visible light reflection region R1 at the position which is easily and visually recognized by an external person, it is possible to cause the external person to visually recognize the color of the entire region of the lidar cover 1 as a metallic tone. Similarly, by providing the high-transmittance region R2 at the lower portion, the high-transmittance region R2 is less likely to be visually recognized, and it is thereby possible to cause the external person to visually recognize the color of the entire region of the lidar cover 1 as a metallic tone.

Furthermore, the lidar cover 1 according to the embodiment, includes: the colored base layer 2 that is capable of transmitting the measurement light therethrough and is disposed so that the back surface thereof faces the lidar unit R; the cold mirror layer 3 that is disposed on the front surface side of the base layer 2 on the visible light reflection region R1; and the protective layer 4 that is disposed at the position closest to the surface layer on the visible light reflection region R1 and the high-transmittance region R2 and is capable of transmitting measurement light and visible light therethrough. According to the above-described lidar cover 1 of the embodiment, since the cold mirror layer and the base layer 2 are covered with the protective layer 4, excellent weatherability is obtained, and it is possible to cause the lidar cover to be appropriately mounted on a vehicle.

Additionally, the lidar cover 1 according to the embodiment includes the cold mirror layer 3 serving as the visible light reflection layer. For this reason, it is possible to an external person to visually recognize the visible light reflection region R1 as a metallic tone.

As described above, while preferred embodiment of the invention have been described and shown above, it should be understood that these are exemplary of the invention and are not to be considered as limiting. Additions, omissions, substitutions, and other modifications can be made without departing from the scope of the present invention. Accordingly, the invention is not to be considered as being limited by the foregoing description, and is only limited by the scope of the appended claims.

In the above-described embodiment, for example, the configuration of the lidar cover was described which includes the cold mirror layer 3 serving as the visible light reflection layer that reflects at least part of visible light from outside and allows the measurement light to transmit therethrough.

However, the invention is not limited to this configuration. For example, as shown in FIG. 4, instead of the cold mirror layer 3, a configuration may be adopted which includes a laminated metal thin film 5 that allows measurement light to transmit therethrough. The laminated metal thin film 5 includes a plurality of layered metal thin films and reflects part of or all of visible light. In the case of using the laminated metal thin film 5 that reflects all of visible light, it is possible to obtain a visible light reflection region R1 having a mirror surface (metallic tone). On the other hand, in the case of using the laminated metal thin film 5 that reflects only part of visible light, for example, it is possible to obtain a visible light reflection region R1 having other color tone such as a simple color.

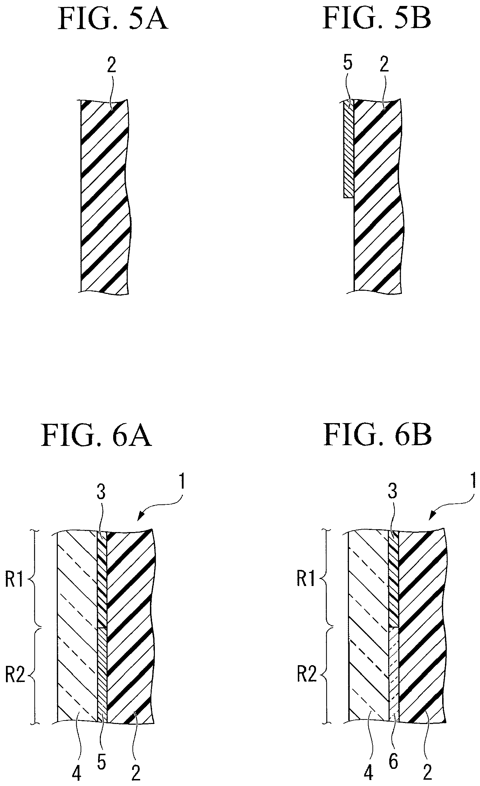

In the case of manufacturing the lidar cover 1 including the foregoing laminated metal thin film 5 shown in FIG. 4, for example, as shown in FIG. 5A, the base layer 2 is formed in advance by injection molding. Next, as shown in FIG. 5B, the laminated metal thin film 5 is formed on the base layer 2 by for example, vapor-deposition. Finally, the protective layer 4 is formed on the base layer 2 so as to cover the laminated metal thin film 5. Furthermore, the protective layer 4 formed of polycarbonate resin of acrylic resin which are each a transparent material is shaped in advance by injection molding or the like, the laminated metal thin film 5 is formed on the back surface side of the protective layer 4, and finally the base layer 2 may be formed which have a multilayer structure including an ink layer that is capable of transmitting measurement light therethrough.

Also, in the aforementioned embodiment, the configuration is adopted in which the base layer 2 and the protective layer 4 are only layered on the high-transmittance region R2. However, the invention is not limited to this configuration. For example, in the case where the aforementioned laminated metal thin film 5 has transmittance with respect to measurement light which is higher than that of the cold mirror layer 3 according to the above-mentioned first embodiment, as shown in FIG. 6A, the laminated metal thin film 5 may be provided on the high-transmittance region R2 of the lidar cover 1 according to the above-described first embodiment. In such case, the high-transmittance region R2 also reflects at least part of visible light, but this case is the same as the lidar cover 1 according to the above-described first embodiment in that the high-transmittance region R2 has transmittance of the measurement light higher than that of the visible light reflection region R1.

In other cases, in the configuration shown in FIG. 6A, the laminated metal thin film 5 may has a function of a band-pass filter that allows only part of wavelength components included in the measurement light to selectively transmit. By adopting the above configuration, it is possible to allow only a specific wavelength component included in the measurement light to enter a light incident portion of the lidar unit R, and it is possible to improve accuracy of measurement of the lidar unit R.

Additionally, for example, as shown in FIG. 6B, instead of the laminated metal thin film 5 shown in FIG. 6A, a thickness adjusting layer 6 having transparency with respect to visible light and measurement light may be provided on the high-transmittance region R2. The thickness adjusting layer 6 is provided on the front surface of the base layer 2 and has substantially the same thickness that of the cold mirror layer 3. As a result of providing the above-described thickness adjusting layer 6, the surfaces of the cold mirror layer 3 and the thickness adjusting layer 6 can be on the same plane. Accordingly, for example, irregularity that follows the front surface of the cold mirror layer 3 can be prevented from being generated on the surface of the protective layer 4.

Furthermore, the invention is not limited to the configuration the visible light reflection region R1 or the high-transmittance region R2 has a single region. The invention may provide a configuration including plurality of visible light reflection regions R1 or a plurality of high-transmittance regions R2.

Moreover, according to the embodiment of the invention, a metal thin film layer having a sea-island structure having a plurality of spaces may be formed as a visible light reflection layer. Such metal thin film layer can be obtained by forming a film on the base layer 2 by vacuum based deposition or a sputtering method using, for example, indium (In) or aluminum (Al).

### DESCRIPTION OF REFERENCE NUMERALS

- 1: lidar cover
- 2: base layer
- 3: cold mirror layer (visible light reflection layer)
- 4: protective layer
- 5: laminated metal thin film (visible light reflection layer)
- 6: thickness adjusting layer
- R: lidar unit
- R1: visible light reflection region (one of regions, first region)
- R2: high-transmittance region (the other of the regions, second region)
- R3: surrounding region (third region)

## Claims

1. A lidar cover that covers a lidar unit mounted on a vehicle and is capable of transmitting measurement light of the lidar unit therethrough, comprising:
a visible light reflection region that is a first region of the lidar cover as seen in a transmission direction of the measurement light and includes a visible light reflection layer, the visible light reflection layer reflecting at least part of visible light from outside and allowing the measurement light to transmit therethrough; and
a high-transmittance region that is a second region different from the first region and has transmittance of the measurement light higher than that of the visible light reflection region.

2. The lidar cover according to claim 1, wherein
the visible light reflection region is disposed at an upper portion of the entire region as seen in the transmission direction of the measurement light.

3. The lidar cover according to claim 1 or claim 2, further comprising:
a base layer that is capable of transmitting the measurement light therethrough, has a back surface, and is disposed so that the back surface faces the lidar unit; and
a protective layer that is capable of transmitting the measurement light and the visible light therethrough, wherein
the visible light reflection layer is disposed at a position close to a front surface of the base layer on the visible light reflection region, and
the protective layer is disposed at a position closest to a surface layer on the visible light reflection region and the high-transmittance region.

4. The lidar cover according to claim 3, further comprising:
a thickness adjusting layer that is disposed at a position close to the front surface of the base layer on the high-transmittance region and at least allows the measurement light to transmit therethrough.

5. The lidar cover according to any one of claims 1 to 4, wherein
the visible light reflection layer is a cold mirror layer formed of a dielectric laminated film.

6. The lidar cover according to any one of claims 1 to 4, wherein
the visible light reflection layer is formed of a laminated metal thin film having a plurality of layered metal thin films.

7. The lidar cover according to any one of claims 1 to 6, wherein
the visible light reflection layer allows only part of wavelength components included in the measurement light to selectively transmit therethrough.

## Patentansprüche

1. Lidarabdeckung, welche eine an einem Fahrzeug befestigte Lidareinheit abdeckt und ein Messlicht der Lidareinheit durchlassen kann, umfassend:
einen Reflexionsbereich für sichtbares Licht, welcher, in einer Transmissionsrichtung des Messlichts betrachtet, ein erster Bereich der Lidarabdeckung ist und eine Reflexionsschicht für sichtbares Licht enthält, wobei die Reflexionsschicht für sichtbares Licht mindestens einen Teil des sichtbaren Lichts von außen reflektiert und ermöglicht, dass das Messlicht durchgelassen wird; und
einen Bereich mit hoher Durchlässigkeit, der ein zweiter Bereich ist, der sich von dem ersten Bereich unterscheidet und dessen Durchlässigkeit des Messlichts höher ist als die des Reflexionsbereichs für sichtbares Licht.

2. Lidarabdeckung nach Anspruch 1, wobei
der Reflexionsbereich für sichtbares Licht, in Transmissionsrichtung des Messlichts betrachtet, an einem oberen Bereich des gesamten Bereichs angeordnet ist.

3. Lidarabdeckung nach Anspruch 1 oder Anspruch 2, ferner umfassend:
eine Basisschicht, die das Messlicht durchlassen kann, eine Rückseite aufweist und derart angeordnet ist, dass die Rückseite der Lidareinheit zugewandt ist; und
eine Schutzschicht, die das Messlicht und das sichtbare Licht durchlassen kann, wobei
die Reflexionsschicht für sichtbares Licht an einer Position nahe einer Vorderfläche der Basisschicht auf dem Reflexionsbereich für sichtbares Licht angeordnet ist, und
die Schutzschicht an einer Position angeordnet ist, die einer Oberflächenschicht auf dem Reflexionsbereich für sichtbares Licht und dem Bereich mit hoher Durchlässigkeit am nächsten liegt.

4. Lidarabdeckung nach Anspruch 3, ferner umfassend:
eine Schicht zur Einstellung der Dicke, die an einer Position nahe der Vorderfläche der Basisschicht auf dem Bereich mit hoher Durchlässigkeit angeordnet ist und zumindest ermöglicht, dass das Messlicht durch diese hindurchgeht.

5. Lidarabdeckung nach einem der Ansprüche 1 bis 4, wobei
die Reflexionsschicht für sichtbares Licht eine Kaltlichtspiegelschicht ist, die aus einem dielektrischen laminierten Film ausgebildet ist.

6. Lidarabdeckung nach einem der Ansprüche 1 bis 4, wobei
die Reflexionsschicht für sichtbares Licht aus einem laminierten Metalldünnfilm ausgebildet ist, welcher eine Vielzahl von geschichteten Metalldünnfilmen enthält.

7. Lidarabdeckung nach einem der Ansprüche 1 bis 6, wobei
die Reflexionsschicht für sichtbares Licht erlaubt, dass nur ein Teil der im Messlicht enthaltenen Wellenlängenkomponenten selektiv durchgelassen wird.

## Revendications

1. Couvercle lidar qui couvre une unité lidar montée sur un véhicule et qui est capable de faire traverser la lumière de mesure de l'unité lidar, comprenant :
- une région de réflexion de la lumière visible qui est une première région du couvercle lidar, comme vue dans une direction de transmission de la lumière de mesure, et qui comprend une couche de réflexion de la lumière visible, la couche de réflexion de la lumière visible réfléchissant au moins une partie de la lumière visible depuis l'extérieur et permettant de laisser passer la lumière de mesure ; et
- une région à transmission élevée qui est une deuxième région différente de la première région et qui présente une transmission de la lumière de mesure supérieure à celle de la région de réflexion de la lumière visible.

2. Couvercle lidar selon la revendication 1, dans lequel la région de réflexion de la lumière visible est disposée sur une partie supérieure de l'ensemble de la région, comme vue dans la direction de transmission de la lumière de mesure.

3. Couvercle lidar selon la revendication 1 ou 2, comprenant en outre :
- une couche de base qui est capable de faire passer la lumière de mesure, qui possède une surface arrière et qui est disposée de sorte que la surface arrière fasse face à l'unité lidar ; et
- une couche de protection qui est capable de faire passer la lumière de mesure et la lumière visible,
dans lequel la couche de réflexion de la lumière visible est agencée à proximité d'une surface avant de la couche de base sur la région de réflexion de la lumière visible, et
dans lequel la couche de protection est agencée le plus près possible d'une couche de surface sur la région de réflexion de la lumière visible et sur la région à transmission élevée.

4. Couvercle lidar selon la revendication 3, comprenant en outre :
- une couche de réglage d'épaisseur qui est disposée à proximité de la surface avant de la couche de base sur la région à transmission élevée et qui permet au moins à la lumière de mesure de passer.

5. Couvercle lidar selon l'une des revendications 1 à 4, dans lequel la couche de réflexion de la lumière visible est une couche à miroir froid formée sur un film laminé diélectrique.

6. Couvercle lidar selon l'une des revendications 1 à 4, dans lequel la couche de réflexion de la lumière visible est constituée d'un film fin métallique laminé présentant une pluralité de films fins métalliques stratifiés.

7. Couvercle lidar selon l'une des revendications 1 à 6, dans lequel la couche de réflexion de la lumière visible permet de faire passer uniquement une partie des composantes de longueur d'onde incluses dans la lumière de mesure pour faire passer de façon sélective.
